# EUROPEAN PATENT APPLICATION

(11) **EP 4 641 784 A1**
(43) Date of publication of application: **29.10.2025**
(21) Application number: 24172659.5
(22) Date of filing: 26.04.2024
(51) Int. Cl.: H01M 50/204, H01M 50/282, H01M 50/342

(54) **BATTERY SYSTEM INCLUDING IMPROVED CELL COVER**

(71) Applicant: Samsung SDI Co., Ltd., Yongin-si, Gyeonggi-do 17084 (KR)
(72) Inventor: Tripaum, Florian, 7412 Wolfau (AT)
(74) Representative: Gulde & Partner

(57) **Abstract**

The present disclosure refers to a battery system (100) including: a plurality of battery cells (12), wherein each of the battery cells (12) includes a venting side with a venting exit (14) for discharging a venting gas stream (V), a first cover sheet (20) of a first thickness (t1) covering the plurality of battery cells (12) at the venting sides to protect the battery cells (12) from the venting gas stream (V), the first cover sheet (20) including venting openings (22) aligned with the venting exits (14) of the battery cells (12) for letting the discharged venting gas stream (V) pass through the first cover sheet (20), a second cover sheet (30) of a second thickness (t2) disposed between the first cover sheet (20) and the plurality of battery cells (12), the second cover sheet (30) covering the venting exits (14) of the battery cells (12), wherein the second cover sheet (30) is adapted to rupture at a section (32) opposite the venting exits (14) by the pressure of the discharged venting gas stream (V) exiting the covered venting exit (14), wherein the first thickness (t1) is larger than the second thickness (t2).

## Description

### Field of the Disclosure

The present disclosure relates to a battery system and a vehicle including such a battery system.

### Technological Background

Recently, vehicles for transportation of goods and peoples have been developed that use electric power as a source for motion. Such an electric vehicle is an automobile that is propelled permanently or temporarily by an electric motor, using energy stored in rechargeable batteries. An electric vehicle may be solely powered by batteries (Battery Electric Vehicle, BEV) or may include a combination of an electric motor and, for example, a conventional combustion engine (Plugin Hybrid Electric Vehicle, PHEV). BEVs and PHEVs use high-capacity rechargeable batteries, which are designed to provide power for propulsion over sustained periods of time.

Generally, a rechargeable (or secondary) battery cell includes an electrode assembly including a positive electrode, a negative electrode, and a separator interposed between the electrodes. A solid or liquid electrolyte allows movement of ions during charging and discharging of the battery cell. The electrode assembly is located in a casing and electrode terminals, which are positioned on the outside of the casing, establish an electrically conductive connection to the electrodes. The shape of the casing may be, for example, cylindrical or rectangular.

A battery module is formed of a plurality of battery cells connected together in series or in parallel. That is, the battery module is formed by interconnecting the electrode terminals of the plurality of battery cells depending on a desired amount of power and in order to realize a high-power rechargeable battery.

Battery modules can be constructed in either a block design or a modular design. In the block design each battery cell is coupled to a common current collector structure and a common battery management system and the unit thereof is arranged in a housing. In the modular design, pluralities of battery cells are connected together to form submodules and several submodules are connected together to form the battery module. In automotive applications, battery systems generally include a plurality of battery modules connected together in series to provide a desired voltage.

A battery pack is a set of any number of (for example identical) battery modules or single battery cells. The battery modules, respectively battery cells, may be configured in a series, parallel or a mixture of both to deliver the desired voltage, capacity, and/or power density. Components of a battery pack include the individual battery modules, and the interconnects, which provide electrical conductivity between the battery modules.

An active or passive thermal management system may be included to provide thermal control of the battery pack, to safely use the at least one battery module by efficiently emitting, discharging, and/or dissipating heat generated from its rechargeable batteries. If the heat emission/discharge/dissipation is not sufficiently performed, temperature deviations may occur between respective battery cells, such that the at least one battery module may no longer generate a desired (or designed) amount of power. In addition, an increase of the internal temperature can lead to abnormal reactions occurring therein, and thus charging and discharging performance of the rechargeable battery deteriorates and the life-span of the rechargeable battery is shortened. Thus, cell cooling for effectively emitting/discharging/dissipating heat from the cells is required.

Exothermic decomposition of cell components may lead to a so-called thermal runaway. Generally, thermal runaway describes a process that accelerates due to increased temperature, in turn releasing energy that further increases temperature. Thermal runaway occurs in situations when an increase in temperature changes the conditions in a way that causes a further increase in temperature, often leading to a destructive result. In rechargeable battery systems, thermal runaway is associated with strong exothermic reactions that are accelerated by temperature rise. In thermal runaway, the battery cell temperature rises incredibly fast and the energy stored is released very suddenly. In extreme cases, thermal runaway can cause battery cells to explode and start fire. In minor cases, it can cause battery cells to be damaged beyond repair.

When a battery cell is heated above a critical temperature (for example, above 150°C) the battery cell can transition into a thermal runaway. Generally, temperatures outside of the safe region on either the low or high side may lead to irreversible damage to the battery cell and therefore may possible trigger thermal runaway. Thermal runaway may also occur due to an internal or external short circuit of the battery cell or poor battery maintenance. For example, overcharging or rapid charging may lead to thermal runaway.

During thermal runaway, the failed battery cell may reach a temperature exceeding 700°C.

Further, a venting gas stream including large quantities of hot gas and particles are ejected from inside of the failed battery cell through the venting opening of the cell housing into the battery pack. The main components of the vented gas are H₂, CO₂, CO, electrolyte vapor and other hydrocarbons. The vented gas is therefore flammable and potentially toxic. The vented gas also causes a gas-pressure to increase inside the battery pack. In the worst case, the high temperatures lead to the process spreading to neighboring cells and fire in the battery pack. At this stage, the fire is hardly to extinguish.

A venting concept for a battery in the related art is to let the venting gas stream discharged by the battery cell(s) expand into the battery housing and escape through a housing venting valve to the outside (e.g., to the environment of the battery housing). The venting gas stream thereby heats up the components inside the battery housing such as the other battery cells. For example, particles from the venting gas stream may deposit onto the battery cells which may lead to thermal propagation and may incite thermal runaway in adjacent battery cells. To protect the battery cells from this, a cover element may be provided covering the battery cells at their venting side.

Such a cover element may include venting openings in the form of through-holes that are aligned with the venting exits of the battery cells to let the venting gas stream pass through the cover element in case of a thermal runaway of one of the covered battery cells. After passing through the cover element, particles of the discharged venting gas stream may deposit onto the cover element. Thereby, however, particles of the venting gas stream may pass through another venting opening of the cover element that is aligned with the venting exit of one of the battery cells and may thus enter the other battery cell. This may lead to thermal propagation to the other battery cell and, in the worst case, incite a thermal runaway in the other battery cell.

It is thus an object of the present invention to overcome or reduce at least some of the drawbacks of the prior art and to provide a battery system which more securely handles a thermal runaway of one or more of its battery cells.

### Summary of Invention

The invention is defined by the appended claims. The description that follows is subjected to this limitation. Any disclosure lying outside the scope of said claims is only intended for illustrative as well as comparative purposes.

According to one aspect of the present disclosure, a battery system includes a plurality of battery cells, wherein each of the battery cells includes a venting side with a venting exit for discharging a venting gas stream, a first cover sheet of a first thickness covering the plurality of battery cells at the venting sides to protect the battery cells from the venting gas stream, the first cover sheet including venting openings aligned with the venting exits of the battery cells for letting the discharged venting gas stream pass through the first cover sheet, a second cover sheet of a second thickness disposed between the first cover sheet and the plurality of battery cells, the second cover sheet covering the venting exits of the battery cells, wherein the second cover sheet is adapted to rupture at a section opposite the venting exits by the pressure of the discharged venting gas stream exiting the covered venting exit, wherein the first thickness is larger than the second thickness.

According to an aspect of the present disclosure, the first cover sheet and the second cover sheet are made of heat-resistant material.

According to an aspect of the present disclosure, the first cover sheet and the second cover sheet are mica sheets.

According to an aspect of the present disclosure, the first cover sheet and the second cover sheet are made of the same material.

According to an aspect of the present disclosure, the first thickness is 3-times to 20-times larger than the second thickness.

According to an aspect of the present disclosure, the first thickness is 5-times to 10-times larger than the second thickness.

According to an aspect of the present disclosure, the first thickness is at least 2 mm, or at least 3 mm, or at least 5 mm.

According to an aspect of the present disclosure, the second thickness is 0.2 mm or less, or 0.15 mm or less, or 0.1 mm or less.

According to an aspect of the present disclosure, the second cover sheet is disposed directly onto the battery cells.

According to an aspect of the present disclosure, the second cover sheet is adhered to the battery cells.

According to yet another aspect of the present disclosure, a vehicle including a battery system as defined above is provided.

Further aspects of the present disclosure could be learned from the dependent claims or the following description.

### Brief Description of the Drawings

Features will become apparent to those of ordinary skill in the art by describing in detail exemplary embodiments with reference to the attached drawings in which:
- FIG. 1: illustrates a schematic sectional view of a battery system according to an embodiment of the disclosure.
- FIG. 2: illustrates a perspective view of a part of the battery system shown in FIG. 1.

### Detailed Description of the invention

Reference will now be made in detail to embodiments, examples of which are illustrated in the accompanying drawings. Effects and features of the exemplary embodiments, and implementation methods thereof will be described with reference to the accompanying drawings. In the drawings, like reference numerals denote like elements, and redundant descriptions are omitted. The present disclosure, however, may be embodied in various different forms, and should not be construed as being limited to only the illustrated embodiments herein. Rather, these embodiments are provided as examples so that this disclosure will be thorough and complete, and will fully convey the aspects and features of the present disclosure to those skilled in the art.

Accordingly, processes, elements, and techniques that are not considered necessary to those having ordinary skill in the art for a complete understanding of the aspects and features of the present disclosure may not be described. In the drawings, the relative sizes of elements, layers, and regions may be exaggerated for clarity.

As used herein, the term "and/or" includes any and all combinations of one or more of the associated listed items. Further, the use of "may" when describing embodiments of the present disclosure refers to "one or more embodiments of the present disclosure." In the following description of embodiments of the present disclosure, the terms of a singular form may include plural forms unless the context clearly indicates otherwise.

It will be understood that although the terms "first" and "second" are used to describe various elements, these elements should not be limited by these terms. These terms are only used to distinguish one element from another element. For example, a first element may be named a second element and, similarly, a second element may be named a first element, without departing from the scope of the present disclosure. As used herein, the term "and/or" includes any and all combinations of one or more of the associated listed items. Expressions such as "at least one of," when preceding a list of elements, modify the entire list of elements and do not modify the individual elements of the list.

As used herein, the term "substantially," "about," and similar terms are used as terms of approximation and not as terms of degree, and are intended to account for the inherent deviations in measured or calculated values that would be recognized by those of ordinary skill in the art. Further, if the term "substantially" is used in combination with a feature that could be expressed using a numeric value, the term "substantially" denotes a range of +/- 5% of the value centered on the value.

It will be further understood that the terms "include," "comprise," "including," or "comprising" specify a property, a region, a fixed number, a step, a process, an element, a component, and a combination thereof but do not exclude other properties, regions, fixed numbers, steps, processes, elements, components, and combinations thereof.

It will also be understood that when a film, a region, or an element is referred to as being "above" or "on" another film, region, or element, it can be directly on the other film, region, or element, or intervening films, regions, or elements may also be present.

Herein, the terms "upper" and "lower" are defined according to the z-axis. For example, the upper cover is positioned at the upper part of the z-axis, whereas the lower cover is positioned at the lower part thereof. In the drawings, the sizes of elements may be exaggerated for clarity. For example, in the drawings, the size or thickness of each element may be arbitrarily shown for illustrative purposes, and thus the embodiments of the present disclosure should not be construed as being limited thereto.

In the following description of embodiments of the present disclosure, the terms of a singular form may include plural forms unless the context clearly indicates otherwise.

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

### General Concept

According to one aspect of the present disclosure, a battery system is provided. The battery system includes a plurality of battery cells. The battery cells may be accommodated inside a battery housing of the battery system. The battery cells may be arranged, or stacked, along a stacking direction to form one or more cell stacks. The battery cells may be interconnected via electrical connecting means, for example, busbars, contacting respective electrode terminals of the battery cells to form one or more battery modules/battery packs. The battery cells may be arranged to form one or more battery packs, wherein in a battery pack the battery cells may be electrically interconnected, for example, in a series and/or in parallel as explained above. Multiple of these battery packs may form a battery module. The battery cells may, for example, be prismatic or cylindrical cells.

Each of the battery cells includes a venting exit at a venting side of the battery cell, which may be a terminal side of the battery cells where the electrode terminals of the battery cells are disposed. Each venting exit is adapted to allow for a venting gas stream to be discharged from the respective battery cell during a thermal runaway of this battery cell. Venting valves may be provided at the venting exits which may open upon a predefined pressure being exceeded.

The battery system further includes a first cover sheet of a first thickness. The first cover sheet is disposed to cover the plurality of battery cells at their venting sides. The first cover sheet covers all of the battery cells of the plurality of battery cells, i.e. the first cover sheet extends about the venting sides of all of the battery cells of the plurality of battery cells. The venting side of the battery cells may be a top side of the battery cells. The first cover sheet may, for example, cover the top side of the battery cells and may thus form a first top cover sheet. The top side of the battery cells is a side of the battery cells that faces upwards during an intended use position of the battery system, e.g. in an installation position of the battery system inside an electric vehicle.

The first cover sheet covers the battery cells such that it protects the covered battery cells from venting products of the venting gas stream that may be discharged by one or more of the battery cells during a thermal runaway. That is, the first cover sheet may completely cover the venting sides, e.g. the complete top side, of the battery cells aside from the venting exits. At the position of each venting exit of the battery cells, the first cover sheet includes a venting opening: The first cover sheet includes venting openings in the form of through-holes, the venting openings being each aligned with one of the venting exits of the battery cells so that the venting gas stream exiting one of the battery cells via its venting exit may pass through the corresponding venting opening and thus through the first cover sheet. The first cover sheet may be a heat-resistant cover sheet such that it may withstand the temperatures of the venting gas stream. Particles from the venting gas stream may deposit onto the first cover sheet without damaging it. The first cover sheet may prevent thermal propagation from the venting gas stream to the battery cells.

The battery system further includes a second cover sheet of a second thickness. The second cover sheet is disposed between the first cover sheet and the venting sides of the plurality of battery cells. The second cover sheet may be disposed directly on the venting sides of the battery cells, may e.g. be adhered or sealed to the venting sides of the battery cells. The second cover sheet covers all of the battery cells of the plurality of battery cells, i.e. the second cover sheet extends about the venting sides of all of the battery cells of the plurality of battery cells. The second cover sheet also covers the venting exits of the battery cells. In other words, the second cover sheet extends about the venting sides, e.g. the top side, of the battery cells including the venting exits. The second cover sheet may form a second top cover sheet. The second cover sheet may completely cover the venting sides, e.g. the complete top side, of the battery cells including the venting exits. That is, while the first cover sheet does not cover the venting exits of the battery cells, the second cover sheet does cover the venting exits.

The second cover sheet is adapted to rupture, i.e. break, at sections opposite the venting exits by the pressure of the discharged venting gas stream exiting the covered venting exit. In other words, the second cover sheet is adapted such that is cannot withstand the pressure exerted onto the second cover sheet by a venting gas stream exiting one of the covered battery cells. Thus, when a battery cell of the plurality of battery cells undergoes a thermal runaway, a hot venting gas stream exits the affected battery cell at its venting exit and ruptures the second cover sheet. The second cover sheet may be adapted as such based on its material and/or thickness. For example, the second cover sheet may have a thickness that is so low that the second cover sheet ruptures when the venting gas pressure is exerted upon it but that is high enough that the second cover sheet may withstand any particles deposited onto the second cover sheet from the other side.

The first cover sheet, however, shall withstand these pressures. Thus, the first thickness is larger than the second thickness. In other words, the second cover sheet has a smaller thickness than the first cover sheet. The second cover sheet may have uniform thickness. That is, the second cover sheet may have the same thickness in the sections opposite the venting exits as in the surrounding sections, or any other sections than the sections opposite the venting exits. The sections of the second cover sheet opposite the venting exits may be the parts of the uniform sheet that are aligned with the venting exits and venting openings. The second cover sheet may be a heat-resistant cover sheet such that it may withstand particles from the venting gas stream that deposit onto the second cover sheet without taking damage. Also, the second cover sheet covering the venting exits may prevent any outside contamination, e.g. moisture or other particles, entering the battery cells through their venting exits during normal operation.

The venting gas stream discharged by one of the battery cells of the plurality of batter cells undergoing thermal runaway may leave the venting exit of the affected battery cell, rupture the corresponding section of the second cover sheet opposite the venting exit, pass through the second cover sheet, enter and pass through the venting opening of the first cover sheet and thus pass through the first cover sheet. The venting gas stream ejected in such a manner is kept away from the other battery cells of the battery system by the first and second cover sheet.

That is, the venting gas stream may come into contact with an outer side of the first cover sheet and, at the venting openings, with the underlying second cover sheet (that is, with the sections of the underlying second cover sheet opposite the venting exits and facing the venting openings). However, the venting gas stream, even when passing another venting opening, cannot enter another battery cell because the venting exit of that battery cell is covered, and e.g. sealed, by the second cover sheet. For example, particles form the venting gas stream may deposit onto the first cover sheet and, at the venting openings of the first cover sheet, onto the sections of the second cover sheet beneath the venting openings but may not reach the underlying battery cells. The rupture section of the second cover sheet will rupture only at a high pressure that occurs during thermal runaway of that one battery cell the venting exit of which the rupture section is aligned with. Such a pressure may be built up due to the second cover sheet sealing the venting exit.

Thus, the two cover sheets combine the protective advantages of a cover having a high thickness combined with a cover having a low thickness in sections corresponding to the venting openings. The two cover sheets provide a combined cell cover that on the one hand is stable enough to protect the battery cells and on the other hand is brittle enough to enable venting. Placing the thinner second cover sheet on the thicker first cover sheet would bear the risk that the thinner second cover sheet bends outwards so that venting gas might possibly flow between the cover sheets towards the adjacent battery cells. Arranging the thinner second cover sheet below the thicker first cover sheet prevents this. Also, arranging the thinner second cover sheet below the thicker first cover sheet is of advantage because it helps rupturing of the thinner second cover sheet as it can lean on the edge of the venting opening of the thicker first cover sheet. That is, the second cover sheet may be held in place by the first cover sheet during rupturing.

According to an embodiment, the first cover sheet and/or the second cover sheet are made of heat-resistant material. The first and/or second cover sheet may thus withstand the temperatures of the venting gas stream. Particles from the venting gas stream may deposit onto the first and/or second cover sheet without damaging it. The first and/or second cover sheet may prevent thermal propagation from the venting gas stream to the battery cells.

According to an embodiment, the first cover sheet and/or the second cover sheet are mica sheets. In other words, the first cover sheet and/or the second cover sheet may include mica silicate minerals. Such mica sheets are heat-resistant. Also, such mica material may be a suitable material for the second cover sheet because, in a suitable thickness range, the second cover sheet being a mica sheet or including mica allows for the second cover sheet to rupture as intended while being able to withstand any particles deposited onto the second cover sheet.

According to an embodiment, the first cover sheet and the second cover sheet are made of the same material. For example, the first cover sheet and the second cover sheet may be mica sheets. Choosing the same material, e.g. mica, for both the first and the second cover sheet may provide the advantages of providing protection and allowing venting in a constructively simple manner. As mentioned, mica sheets are heat-resistant and thus well suited for use as first and second cover sheets.

According to an embodiment, the first thickness is 3-times to 20-times larger than the second thickness. According to an embodiment, the first thickness is 5-times to 10-times larger than the second thickness. That is, the first cover sheet may be 3-times to 20-times thicker, or 5-times to 10-times thicker than the second cover sheet. A thickness difference between the cover sheets in such ranges may support rupturing of the thinner second cover sheet because it may be held sufficiently in place so that it can lean on the edge of the venting opening of the thicker first cover sheet when exposed to the high pressure of the venting gas stream.

According to an embodiment, the first thickness is at least 2 mm, or at least 3 mm, or at least 5 mm. In other words, the first cover sheet may have a thickness of at least 2 mm, or at least 3 mm, or at least 5 mm. The first cover sheet may have a uniform thickness, as mentioned, may thus e.g. have a thickness of at least 2 mm, or at least 3 mm, or at least 5 mm over its entire extension. The first cover sheet having such a thickness may provide the intended protection from the venting gases and particles and may support rupturing of the thinner second cover sheet.

According to an embodiment, the second thickness is 0.2 mm or less, or 0.15 mm or less, or 0.1 mm or less. In other words, the second cover sheet may have a thickness of 0.2 mm or less, or 0.15 mm or less, or 0.1 mm or less. The first cover sheet may have a uniform thickness, as mentioned, may thus e.g. have a thickness of at least 2 mm, or at least 3 mm, or at least 5 mm over its entire extension. The second cover sheet having such a thickness may ensure the intended rupturing of the second cover sheet while reliably keeping the venting gases and particles discharged by other battery cells away.

According to an embodiment, the second cover sheet is disposed directly on the battery cells at their venting sides. In other words, the second cover sheet may be arranged directly on the battery cells without any intervening sheets or elements. For example, according to an embodiment, the second cover sheet is adhered, and thus sealed, to the battery cells. The second cover sheet may e.g. be glued to the battery cells. Also, the second cover sheet may be pressed onto the batter cells by the first cover sheet. The second cover sheet being disposed directly on the battery cells and/or adhered and/or pressed onto the battery cells may provide for a suitable build up in pressure during thermal runaway such that the section of the second cover sheet opposite the venting exit of the battery cells affected by the thermal runaway may rupture as intended.

The invention also pertains to an electric vehicle including a battery system according to the disclosure, for example as a traction battery.

### Specific Embodiments

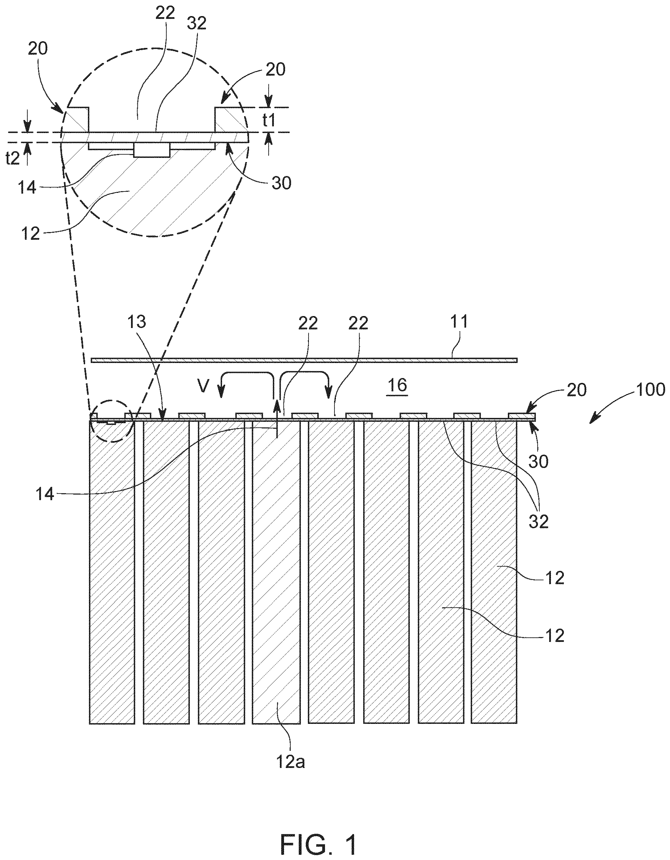

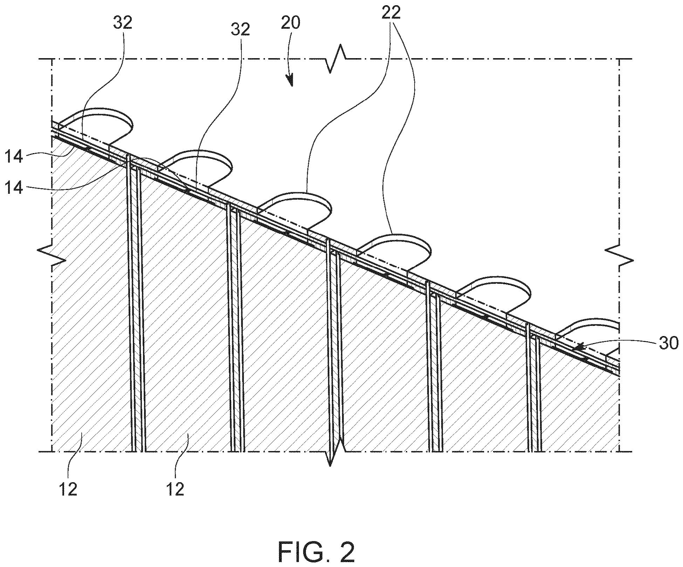

FIG. 1 and 2 schematically illustrate a battery system 100 according to an embodiment of the disclosure.

The battery system 100 includes a plurality of battery cells 12 arranged to form a cell stack. Each of the battery cells 12 includes, at a venting side thereof, a venting exit 14 for discharging a venting gas stream in case of a thermal runaway. Each of the venting exits 14 may include a venting valve. The venting sides of the battery cells 12 form a top side 13 of the battery cells 12. The plurality of battery cells 12 may be arranged inside a battery housing of which only a wall member 11 is shown, the wall member 11 being arranged opposite the top side 13 of the battery cells and delimiting a venting channel 16.

A heat-resistant first cover sheet 20 of the battery system 100 is disposed on the top side 13 of the battery cells 12. The first cover sheet 20 may be a mica sheet. The first cover sheet 20 has a uniform first thickness t1 of, for example, 2 mm. The first cover sheet 20 includes venting openings 22 in the form of through-holes, wherein the venting openings 22 are aligned with the venting exits 14 of the battery cells 12 for letting the venting gas stream discharged from the venting exits 14 pass through the first cover sheet 20. The first cover sheet 20 thus completely covers the plurality of battery cells 12 at their top side 13, and thus at their venting sides, aside from the venting exits 14 where venting openings 22 are arranged.

The battery system 100 further includes a heat-resistant second cover sheet 30 disposed between the first cover sheet 20 and the plurality of battery cells 12. The second cover sheet 30 may be a mica sheet. The second cover sheet 30 has a uniform second thickness t2 of, for example, 0.2 mm. The second cover sheet 30 completely covers the plurality of battery cells 12 at their top side 13, and thus at their venting sides, including the venting exits 14. Thus, the second cover sheet 30 may form one continuous layer. The second cover sheet 30 may be adhered, for example glued, to the top side 13 of the battery cells 12 and/or may be pressed against the top side 13 of the battery cells 12. The second cover sheet 30 thus seals the venting exits 14 with respect to the venting channel 16. The second cover sheet 30 is adapted to rupture at a section 32 opposite the venting exits 14 by the pressure of the discharged venting gas stream exiting one of the covered venting exits 14 in case of a thermal runaway.

In FIG. 1, a battery cell undergoing the thermal runaway 12a of the plurality of battery cells 12 experiences the thermal runaway and thus discharges a venting gas stream V from its venting exit 14. This results in a pressure build-up beneath the second cover sheet 30 and, consequently, to a section of the second cover sheet 30 opposite the venting exit 14 rupturing. As a consequence, the sealing provided by the second cover sheet 30 is broken above the affected battery cell 12 and the venting gas stream V may pass through the second cover sheet 30. As indicated by the arrows in FIG. 1, the venting gas stream V then passes through the corresponding venting opening 22 of the first cover sheet 20 and thus through the first cover sheet 20 and into the venting channel 16. The venting gas stream V may then be deflected by the opposite wall member 11 and may expand along the venting channel 16.

During this process, the venting gas stream V may get into the venting openings 22 aligned with other ones of the battery cells 12 but is stopped by the second cover element 30. Thus, the second cover element 30 prevents the venting gas stream V from reaching other battery cells 12 and thereby prevents thermal propagation of the thermal runaway to further battery cells 12.

The first cover sheet 20 protects the top side 13 of the battery cells 12 from venting products of the venting gas stream and may hold the second cover sheet 30 in place during the rupturing. That is, placing the thinner second cover sheet 30 below the thicker first cover sheet 20 is of advantage because it helps rupturing of the thinner second cover sheet 30 as it can lean on the edge of the venting opening 22 of the thicker first cover sheet 20. The thicker first cover sheet 20 prevents that the thinner second cover sheet 30 is bent outwards by the venting gas stream V which might otherwise result in venting gas flowing between the first cover sheet 20 and second cover sheet 30 towards the adjacent battery cells 12. The first cover sheet 20 having a first thickness t1 of, for example, 2.0 mm and the second cover sheet 30 having a second thickness t2 of, for example, 0.2 mm and both the first cover sheet 20 and the second cover sheet 30 including or being made of mica provides for a sufficient protection of the battery cells 12 from the venting gas stream 12 while allowing for the second cover sheet 30 to be ruptured by the venting gas pressure.

### Reference signs

- 11: wall member of battery housing
- 12: battery cells
- 12a: battery cell undergoing thermal runaway
- 13: top side of battery cells
- 14: venting exits
- 16: venting channel
- 20: first cover sheet
- 22: venting openings
- 30: second cover sheet
- 32: sections of second cover sheet opposite the venting exits
- 100: battery system
- V: venting gas stream
- t1: first thickness
- t2: second thickness

## Claims

1. A battery system (100) comprising:
a plurality of battery cells (12), wherein each of the battery cells (12) comprises a venting side with a venting exit (14) for discharging a venting gas stream (V),
a first cover sheet (20) of a first thickness (t1) covering the plurality of battery cells (12) at the venting sides to protect the battery cells (12) from the venting gas stream (V), the first cover sheet (20) comprising venting openings (22) aligned with the venting exits (14) of the battery cells (12) for letting the discharged venting gas stream (V) pass through the first cover sheet (20), and
a second cover sheet (30) of a second thickness (t2) disposed between the first cover sheet (20) and the plurality of battery cells (12), the second cover sheet (30) covering the venting exits (14) of the battery cells (12), wherein the second cover sheet (30) is adapted to rupture at a section (32) opposite the venting exits (14) by the pressure of the discharged venting gas stream (V) exiting the covered venting exit (14),
wherein the first thickness (t1) is larger than the second thickness (t2).

2. The battery system (100) according to claim 1, wherein the first cover sheet (20) and the second cover sheet (30) are made of heat-resistant material.

3. The battery system (100) according to claim 1 or 2, wherein the first cover sheet (20) and the second cover sheet (30) are made of the same material.

4. The battery system (100) according to any one of the preceding claims, wherein the first cover sheet (20) and the second cover sheet (30) are mica sheets.

5. The battery system (100) according to any one of the preceding claims, wherein the first thickness (t1) is 3-times to 20-times larger than the second thickness (t2).

6. The battery system (100) according to claim 5, wherein the first thickness (t1) is 5-times to 10-times larger than the second thickness (t2).

7. The battery system (100) according to any one of the preceding claims, wherein the first thickness (t1) is at least 2 mm, or at least 3 mm, or at least 5 mm.

8. The battery system (100) according to any one of the preceding claims, wherein the second thickness (t2) is 0.2 mm or less, or 0.15 mm or less, or 0.1 mm or less.

9. The battery system (100) according to any one of the preceding claims, wherein the second cover sheet (30) is disposed directly onto the battery cells (12).

10. The battery system (100) according to any one of the preceding claims, wherein the second cover sheet (30) is adhered to the battery cells (12).

11. An electric vehicle comprising the battery system (100) according to any one of the preceding claims.

## Amended claims

### Amended claims in accordance with Rule 137(2) EPC.

1. A battery system (100) comprising:
a plurality of battery cells (12), wherein each of the battery cells (12) comprises a venting side with a venting exit (14) for discharging a venting gas stream (V),
a first cover sheet (20) of a first thickness (t1) covering the plurality of battery cells (12) at the venting sides to protect the battery cells (12) from the venting gas stream (V), the first cover sheet (20) comprising venting openings (22) aligned with the venting exits (14) of the battery cells (12) for letting the discharged venting gas stream (V) pass through the first cover sheet (20), and
a second cover sheet (30) of a second thickness (t2) disposed between the first cover sheet (20) and the plurality of battery cells (12), the second cover sheet (30) covering the venting exits (14) of the battery cells (12), wherein the second cover sheet (30) is adapted to rupture at a section (32) opposite the venting exits (14) by the pressure of the discharged venting gas stream (V) exiting the covered venting exit (14),
wherein the first thickness (t1) is larger than the second thickness (t2) and wherein the first cover sheet (20) and the second cover sheet (30) are made of the same, heat-resistant material.

2. The battery system (100) according to any one of the preceding claims, wherein the first cover sheet (20) and the second cover sheet (30) are mica sheets.

3. The battery system (100) according to any one of the preceding claims, wherein the first thickness (t1) is 3-times to 20-times larger than the second thickness (t2).

4. The battery system (100) according to claim 3, wherein the first thickness (t1) is 5-times to 10-times larger than the second thickness (t2).

5. The battery system (100) according to any one of the preceding claims, wherein the first thickness (t1) is at least 2 mm, or at least 3 mm, or at least 5 mm.

6. The battery system (100) according to any one of the preceding claims, wherein the second thickness (t2) is 0.2 mm or less, or 0.15 mm or less, or 0.1 mm or less.

7. The battery system (100) according to any one of the preceding claims, wherein the second cover sheet (30) is disposed directly onto the battery cells (12).

8. The battery system (100) according to any one of the preceding claims, wherein the second cover sheet (30) is adhered to the battery cells (12).

9. An electric vehicle comprising the battery system (100) according to any one of the preceding claims.
